# EUROPÄISCHE PATENTSCHRIFT

(11) **EP 0 456 991 B1**
(45) Veröffentlichungstag und Bekanntmachung des Hinweises auf die Patenterteilung: **11.05.1994**
(21) Anmeldenummer: 91104281.0
(22) Anmeldetag: 20.03.1991
(51) Int. Cl.: B60T 8/36, F16F 1/38

(54) **Vorrichtung zur Montage und Fixierung der Hydraulikeinheit eines ABS**
Device for the mounting and fixing of a hydraulic unit of an anti-lock brake system
Dispositif pour le montage et la fixation d'une unité hydraulique d'un système de freinage anti-blocage

(30) Priorität: 15.05.1990 DE 4015561
(43) Veröffentlichungstag der Anmeldung: 21.11.1991
(73) Patentinhaber: MERCEDES-BENZ AG, 70327 Stuttgart (DE)
(72) Erfinder: Benz, Erwin, W-7268 Gechingen (DE); Köhler, Günther, W-7032 Sindelfingen (DE); Wörner, Karl, W-7336 Uhingen (DE)

(56) Entgegenhaltungen:
- EP-A- 0 320 149
- EP-A- 0 358 127
- DE-B- 1 119 062
- DE-C- 3 928 059
- US-A- 1 718 912
- US-A- 3 657 943
- US-A- 4 690 465
- US-A- 4 955 673

## Beschreibung

Die Erfindung betriff eine Vorrichtung zur Montage und Fixierung der Hydraulikeinheit eines ABS gemäß dem Oberbegriff des Patentanspruchs 1.

Bei einer durch offenkundige Vorbenutzung bekannten, der Serienfertigung entsprechenden Vorrichtung der eingangs genannten Art ist als Träger für die Hydraulikeinheit eine Konsole vorgesehen, die ihrerseits an der Fahrzeugkarosserie befestigbar ist. Die Hydraulikeinheit ist mittels dreier Gummilager schwingungsisolierend an der Konsole gelagert. Diese Lager umfassen je einen mit dem Gehäuse der Hydraulikeinheit fest verbundenen Lagerzapfen, einen diesen koaxial umschließenden Gummipuffer sowie eine den Gummipuffer aufnehmende topfförmige Hülse, an deren Boden der Gummipuffer axial nachgiebig abgestützt ist, der, den Lagerzapfen koaxial umschließend, auch an der Gehäusewand der Hydraulikeinheit abgestützt ist. Die zentralen Längsachsen der Lager verlaufen parallel zueinander, in der üblichen Einbaulage horizontal. In Fahrzeuglängsrichtung gesehen sind an der Rückseite der Konsole zwei Aufnahmehülsen angeordnet, die je an einem von der Grundplatte der Konsole aufragenden Stützschenkel derselben im Bodenbereich der Hülse angeschweißt sind. Das vordere topfhülsenförmige Lagerelement ist, im eingebauten Zustand gesehen, an den aufragenden Schenkel eines Winkelstückes angeschweißt, das seinerseits an der Grundplatte der Konsole fixierbar ist. Die bekannte Vorrichtung erfordert eine Montage der Hydraulikeinheit derart, daß diese mit ihren schon auf den Lagerzapfen sitzenden beiden rückwärtigen Gummipuffern in die für diese vorgesehenen Aufnahmehülsen eingesteckt, danach die vordere, an dem Winkel angeordnete Aufnahmehülse auf den Gummipuffer des vorderen Lagers der Hydraulikeinheit aufgesteckt und hiernach der Winkel an der Grundplatte der Konsole befestigt werden, wobei diese schon vorher an der Karosserie festgelegt wird. Um einen hinreichend strammen Sitz der Gummipuffer in den topfförmigen Aufnahmehülsen zu gewährleisten, ist deren lichter Durchmesser geringfügig kleiner als der Außendurchmesser der Gummipuffer, damit diese im eingebauten Zustand unter einer radialen Mindest-Vorspannung stehen.

Die bekannte Vorrichtung ist mit zumindest den folgenden Nachteilen behaftet:

Das Zusammenfügen der beiden rückwärtigen Gummilager ist mühsam, da "gleichzeitig" der zunehmende Reibungswiderstand zweier Gummipuffer in deren Aufnahmehülsen überwunden werden muß. Auch das Ansetzen des die dritte Aufnahmehülse tragenden Winkels an den dritten Gummipuffer der Hydraulikeinheit ist umständlich, da diese, um dieses Ansetzen zu ermöglichen, etwas angehoben werden muß. Wird andererseits die Aufnahmehülse des vorderen Gummilagers mit dem sie tragenden Winkel schon angesetzt, bevor die beiden rückwärtigen Gummilager zusammengefügt werden, so wird das Hantieren mit der Hydraulikeinheit nicht unerheblich erschwert, und es besteht auch die Gefahr, daß die Lagerelemente des vorderen Gummilagers gegeneinander verschoben werden oder sich lösen. Das Fixieren des die Aufnahmehülse für den Gummipuffer des vorderen Gummilager tragenden Winkels ist ein zusätzlicher Arbeitsgang, der die Serienmontage zeitlich belastet.

Aufgabe der Erfindung ist es daher, eine Vorrichtung der eingangs genannten Art dahingehend zu verbessern, daß die Montage der Hydraulikeinheit wesentlich erleichtert und eine definierte kurze Montagezeit erzielt wird.

Diese Aufgabe wird erfindungsgemäß durch die kennzeichnenden Merkmale des Patentanspruchs 1 gelöst.

Hierdurch erzielte, sinnfällige Vorteile sind zumindest die folgenden:

Die Konsole kann als einstückiges Blechteil ausgeführt werden, nach dessen Fixierung an der Karosserie sämtliche konsolenfesten Lagerelemente auch in ihrer Soll-Lage fixiert sind. Die Hydraulikeinheit kann von oben her mit den an die Lagerzapfen angesetzten Gummipuffern einfach und bequem auf die konsolenfesten Lagerelemente aufgesetzt und erforderlichenfalls in diese etwas eingedrückt werden. Die Komplettierung der konsolenseitigen Lagerelemente zu insgesamt im wesentlichen topfförmigen Aufnahmehülsen durch Aufschieben der zusätzlichen Schalenelemente ist ebenfalls auf einfache Weise möglich, z.B. unter Zuhilfenahme eines relativ leichten Hammers mit Kunststoff-Schlagteil. Die Montage ist mit einfachen, in kürzester Zeit durchführbaren Arbeitsgängen durchführbar.

Durch die Merkmale des Anspruchs 2 ist eine diesbezüglich einfache, auch herstellungstechnisch günstige Gestaltung der konsolenfesten Lagerelemente angegeben.

In Kombination hiermit ist durch die Merkmale des Anspruchs 3 eine funktionell günstige Gestaltung der verschiebbaren Schalenelemente angegeben.

Durch die Merkmale des Anspruchs 4 ist eine stabile, eine zuverlässige Sicherung der verschiebbaren Schalenelemente gegen axiale Verrückungen vermittelnde Gestaltung von Rastelementen der konsolenfesten und der an diesen verschiebbar geführten Lagerelemente angegeben, wobei durch gemäß Anspruch 5 vorgesehene, zusätzliche Rastelemente auch eine entsprechend erhöhte Sicherheit der Fixierung erzielt wird.

Durch die Merkmale des Anspruchs 6 ist eine sowohl funktionell wie auch herstellungstechnisch günstige Anordnung solcher Rastelemente angegeben. Die durch die Merkmale des Anspruchs 7 angeben, bevorzugte Ausführungsform zeichnet sich durch eine bsonders einfache Gestaltung der Vorrichtung insgesamt aus, ist für die Montage bequem und technisch einfach realisierbar, insbesondere für den Fall, daß die verschiebbaren Schalenelemente, wie gemäß Anspruch 8 vorgesehen, als spritzgegossene Kunststoffteile ausgebildet sind.

Weitere Einzelheiten und Merkmale der Erfindung ergeben sich aus der nachfolgenden Beschreibung spezieller Ausführungsbeispiele anhand der Zeichnung. Es zeigen:
- Fig. 1: eine vereinfachte Seitenansicht einer erfindungsgemäßen Vorrichtung mit drei Gummilagern für die eingesetzte Hydraulikeinheit,
- Fig. 2: die Vorrichtung gemäß Fig. 1 in vereinfachter, schematischer Draufsicht,
- Fig. 3: eine perspektivische Explosionsdarstellung des vorderen Gummilagers der Vorrichtung,
- Fig. 4: das Lager gemäß Fig. 3 im montierten Zustand, in einer Stirnansicht in Richtung des Pfeils IV der Fig. 3 und
- Fig. 5: Einzelheiten der Gestaltung von Rastelementen zur axialen Fixierung der verschiebbaren Schalenelemente der Gummilager gemäß den Fig. 1 bis 4.
- Fig. 6: eine weitere Gestaltung eines Gummilagers für eine Vorrichtung gemäß der Fig. 1 und 2, in einer der Fig. 3 entsprechenden Darstellung und
- Fig. 7: ds Lager gemäß Fig. 6, im Schnitt rechtwinklig zu seiner zentralen Achse.

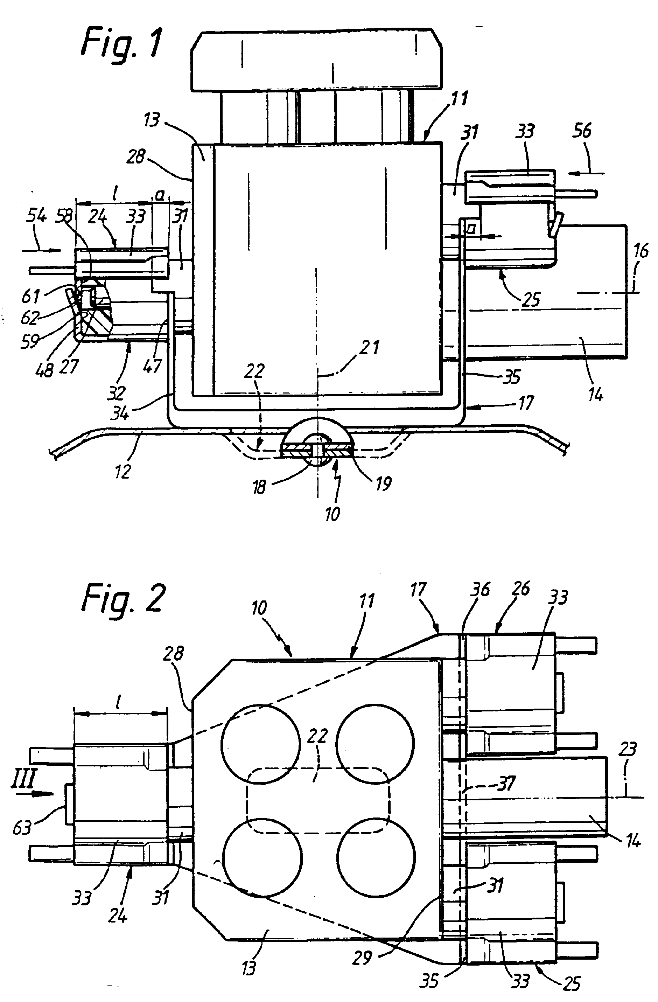

Die in der Fig. 1 in vereinfachter Seitenansicht und in der Fig. 2 in entsprechend vereinfachter Draufsicht dargestellte, insgesamt mit 10 bezeichnete Vorrichtung zur Montage und Fixierung einer insgesamt mit 11 bezeichneten Hydraulikeinheit eines Anti-Blockier-Systems (ABS) und/oder einer Antriebs-Schlupf-Regeleinrichtung (ASR) ist für deren Einbau in Motorraum eines Straßenfahrzeuges gedacht, das in der Fig. 1 lediglich durch einen oberen Bereich des beispielsweise das linke Vorderrad des Fahrzeuges aufnehmenden Radkastens 12 seiner Karosserie repräsentiert ist, an dessen Oberseite die Vorrichtung 10 befestigt ist, mit der ihrerseits die Hydraulikeinheit 11 an der Karosserie 12 fixiert ist.

Die zur Erläuterung des speziellen Ausführungsbeispiels der Vorrichtung 10 dargestellte Hydraulikeinheit 11 entspricht - der äußeren Form nach - derjenigen eines serienmäßigen, nach dem Rückförderprinzip arbeitenden ABS, wobei in einem im wesentlichen quaderförmigen Gehäuseblock 13 im einzelnen nicht dargestellte, den Fahrzeugrädern einzeln zugeordnete Magnetventile als Bremsdruck-Regelventile sowie den beiden Bremskreisen des Fahrzeuges je einzeln zugeordnete Rückförderpumpen untergebracht sind, die einen gemeinsamen Antriebsmotor 14 haben, der mit horizontalem Verlauf seiner zentralen Längsachse 16 angeordnet ist, derart, daß diese Längsachse 16 parallel zur Fahrzeug-Längsrichtung verläuft. Als Träger für diese Hydraulikeinheit 11 ist eine insgesamt mit 17 bezeichnete Konsole vorgesehen, die an der Karosserie 12 des Fahrzeuges befestigt ist. Beim dargestellten, speziellen Ausführungsbeispiel ist zur Fixierung der Konsole 17 an der Karosserie 12 ein Niet 18 vorgesehen, mittels dessen die Konsole mit einer Grundplatte 19 an dem Radkasten 12 satt anliegend fixiert ist. Um ein Drehen der Konsole 17 um die - vertikal verlaufende - zentrale Nietachse 21 auszuschließen, hat die Grundplatte 19 der Konsole 17, wie in der Fig. 1 gestrichelt angedeutet, eine flache nut- oder wellenförmige Profilierung 22, die mit einer entsprechenden Profilierung des Radkastens 12 in formschlüssigem Eingriff steht und dadurch die Fixierung der Hydraulikeinheit 11 mit definierter Orientierung im Motorraum des Fahrzeuges ermöglicht.

Die Konsole 17 ist symmetrisch zu ihrer, in der Einbaulage vertikal verlaufenden Längsmittelebene 23 ausgebildet, in der - in der Montageposition gesehen - auch die zentrale Längsachse 16 des Antriebsmotors 14 der Rückförderpumpen der Hydraulikeinheit 11 verläuft.

Die Hydraulikeinheit 11 ist mittels dreier Gummilager 24, 25 und 26, die, wie am besten der Fig. 2 entnehmbar ist, gleichsam in den Ecken eines gleichschenkligen Dreiecks angeordnet sind, schwingungsisolierend an der karosseriefesten Konsole 17 gelagert.

Beim dargestellten, speziellen Ausführungsbeispiel sind, in Fahrzeuglängsrichtung gesehen, ein vorderes Gummilager 24 und zwei rückwärtige Gummilager 25 und 26 vorgesehen.

Soweit nachfolgend eine Anordnung oder einen Verlauf beschreibende Begriffe wie "vorne", "hinten", "horizontal" oder "vertikal" oder dergleichen verwendet werden, beziehen sich diese Angaben auf die Einbaulage der Hydraulikeinheit 11 und der sie tragenden Konsole 17 am Fahrzeug 12.

Die Gummilager 24, 25 und 26 sind identisch ausgebildet und umfassen als Lagerelemente je einen Lagerzapfen 27, die fest mit dem Gehäuseblock 13 verbunden sind und von dessen vorderer, vertikaler Wand 28 bzw. dessen rückwärtiger vertikaler Wand 29 rechtwinklig abstehen, sowie kreiszylindrisch-hülsenförmig ausgebildete, dickwandige Gummipuffer 31, welche auf die Lagerzapfen 27 aufsteckbar sind und als weitere Lagerelemente konsolenfest angeordnete, schalenförmige Lagerelemente 32, in denen die Hydraulikeinheit 11 mittels der auf ihre Lagerzapfen 27 aufgesteckten Gummipuffer 31 in axialer und radialer Richtung nachgiebig-elastisch abstützbar ist, wobei diese schalenförmigen Lagerelemente 32 die Gummipuffer 31 auf einem unteren Sektorbereich, der beim dargestellten Ausführungsbeispiel 180° beträgt unterstützen und mindestens insoweit umschließen, wobei als weitere Lagerelemente an diese konsolenfesten Teilschalen 32 ansetzbare, die 360°-Umschließung der Gummipuffer 31 komplettierende Schalenteile 33 vorgesehen sind, welche in der dargestellten Montageposition die konsolenfesten schalenförmigen Lagerelemente 32 gleichsam zu insgesamt topfförmigen Lagerhülsen ergänzen, innerhalb derer die Gummipuffer 31 formschlüssig und gegebenenfalls unter einer mäßigen radialen und/oder axialen Vorspannung stehen, gehalten sind.

Die konsolenfeste Teilschale 32 des vorderen Gummilagers 24 ist an der der vorderen vertikalen Begrenzungswand 28 des Gehäuseblocks 13 abgewandten Seite eines von der Grundplatte 19 der Konsole 17 senkrecht aufragenden, vorderen Stützschenkels 34 angeordnet. Die beiden rückwärtigen Gummilager 25 und 26 sind an den der rückwärtigen vertikalen Begrenzungswand 29 des Gehäuseblocks 13 abgewandten Außenseite je eines von der Grundplatte 19 der Konsole 17 senkrecht aufragenden Stützschenkels 35 bzw. 36 angeordnet, zwischen denen der Antriebsmotor 14 der Rückförderpumpen der Hydraulikeinheit 11, über den rückwärtigen Querrand 37 der Grundplatte 19 der Konsole 17 hinausragend, mit dem größten Teil seiner axialen Länge nach hinten auskragend angeordnet ist.

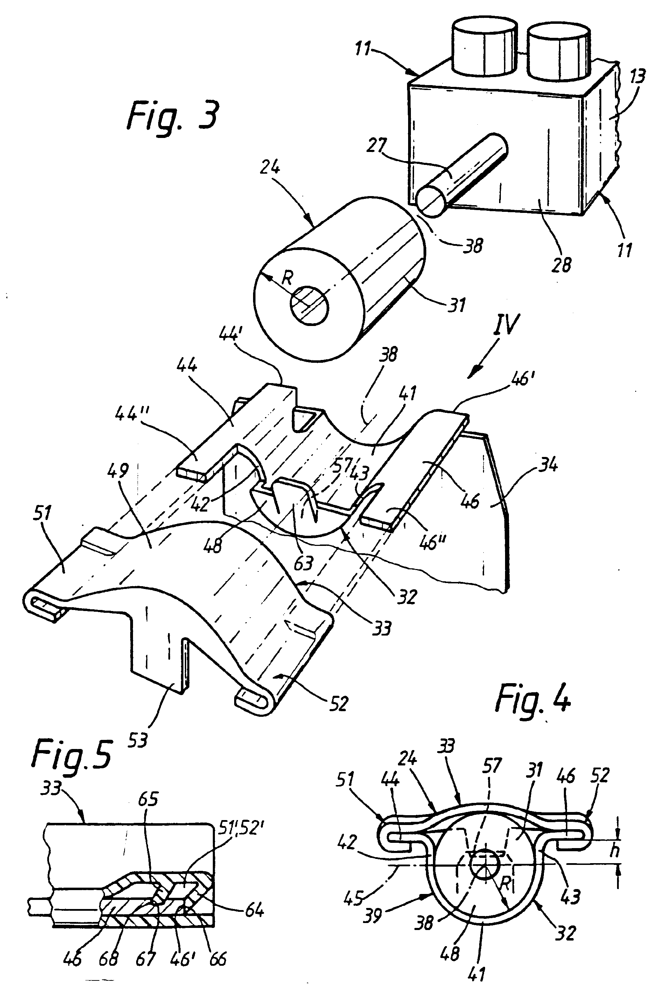

Zu einer mehr in die Einzelheiten gehenden Erläuterung der Gummilager 24, 25 und 26 sei nunmehr auch auf die das vordere Gummilager 24 betreffende Explosionsdarstellung der Fig. 3 und die Ansichtsdarstellung der Fig. 4 verwiesen.

Das konsolenfeste, schalenförmige Lagerelement 32 ist als mit dem vorderen Stützschenkel 34 der Konsole 17 einstückig ausgeführtes, an diesen angeformtes Teil ausgebildet, das einen im Schnitt rechtwinklig zur zentralen Längsachse 38 des Lagers 24 gesehen U-förmig ausgebildeten, nach oben offenen Schalenmantel 39 hat, der, im Profilquerschnitt gesehen, einen halbkreisförmigen, den Gummipuffer 31 dieses Lagers 24 auf dessen unterem 180°-Umfangsbereich unterstützenden und tragenden Jochbereich 41 hat, dessen innerer Krümmungsradius R dem Außenradius des Gummipuffers 31 entspricht. An diesen Jochbereich 41 schließen beidseits des aufzunehmenden Gummipuffers 31 aufragende, kurze vertikale Seitenschenkel 42 und 43 an, deren von der die zentrale Längsachse 38 des Lagers 24 enthaltenden horizontalen Längsmittelebene 45 aus gemessene Höhe h beim dargestellten Ausführungsbeispiel etwa R/3 beträgt und damit deutlich geringer ist als der Außenradius R des Gummipuffers 31.

Die Höhe h dieser Seitenschenkel 42 und 43, die parallel zueinander und parallel zur zentralen Längsachse 38 des Lagers 24 verlaufen, kann zwischen R/4 und R/2 betragen.

An die oberen Längsränder dieser Seitenschenkel 42 und 43 des etwa halbschalenförmigen Lagerelementes 32 schließen sich, jeweils nach außen weisend, mit kleinem Krümmungsradius, der etwa der Wanddicke des Schalenmantels 32 entspricht, in radialer Richtung gesehen, schmale, nach außen weisende, beim dargestellten Ausführungsbeispiel rechtwinklig zu den Seitenschenkeln 42 und 43 verlaufend, Längs-Führungsschenkel 44 und 46 an, die, ebenso wie die Seitenschenkel 42 und 43 selbst, in einem axialen Abstand a (Fig. 1) von der benachbarten Außenfläche des vorderen Stützschenkels 34 enden und sich ansonsten über den größten Teil der axialen Länge 1 des Schalenmantels 39 des Schalenteils 32 erstrecken. Das Schalenteil 32 ist an seinem freien, d.h. dem vorderen Stützschenkel 34 abgewandten Ende mit einem der Grundform nach halbkreisförmigen radialen Bodenflansch 48 versehen, an dem der Gummipuffer 31 im eingebauten Zustand axial abgestützt ist, der dann auch an der vorderen Begrenzungswand 28 des Gehäuseblockes 13 satt anliegt und axial abgestützt ist.

Die an die konsolenfesten, schalenförmigen Lagerelemente 32 ansetzbaren - oberen - Schalenteile 33, mittels derer die konsolenfesten, schalenförmigen Lagerelemente 32 zu insgesamt topfförmigen Aufnahmehülsen für die Gummipuffer 31 ergänzbar sind, die somit entlang ihres gesamten 360°-Umfangs von diesen topf-förmigen Lagerschalen 32, 33 umschlossen sind, haben beim dargestellten Ausführungsbeispiel einen flach-glockenförmigen Mantel 49, dessen seitliche Längsrand-Bereiche 51 und 52 als nach innen hin offene U-Führungsprofile ausgebildet sind, mittels derer die Schalenteile 33 an den Längsführungsschenkeln 44 und 46 der konsolenfesten, schalenförmgien Lagerelemente 32 in axialer Richtung geführt verschiebbar sind, wobei diese U-Führungsprofile 51 und 52 der verschiebbaren Schalenteile 33 auf dem größten Teil ihrer Länge einen zu dem Querschnitt der Längsführungsschenkel 44 und 46 der konsolenfesten Lagerschalen-Elemente 32 komplementären lichten Querschnitt haben. An ihrer der vorderen vertikalen Wand 28 bzw. der rückwärtigen vertikalen Wand 29 des Gehäuseblockes 13 der Hydraulikeinheit 11 jeweils abgewandten Seite sind die verschiebbaren Schalenteile 33 mit einer federnd nachgiebigen Rastzunge 53 versehen, die, wenn die Schalenteile 33 beim Aufschieben auf die schalenförmigen Lagerelemente 32 in Richtung der Pfeile 54 bzw. 56 über ihre in den Fig. 1 und 2 dargestellte Halteposition geringfügig hinaus verschoben werden, eine horizontale Rastkante 57 des radialen Bodenflansches 48 des jeweiligen konsolenfesten Lagerelementes 32 - unter federelastischer Deformation - überquert und danach in eine die Rastkante 57 hintergreifende Position einfedert, in der, wie im linken Teil der Fig. 1 dargestellt, die radial verlaufenden Innenflächen 58 und 59 der Rastzunge 53 bzw. des radialen Bodenflansches 48, an denen der jeweilige Gummipuffer 31 mit seiner äußeren Ringstirnfläche abgestützt ist, koplanar angeordnet sind. Die dabei aneinander zur Anlage kommenden Rastflächen 61 und 62 der Rastzunge 53 bzw. der Rastkante 57 verlaufen unter demselben Winkel bezüglich der Horizontalen schräg geneigt, wobei die - innere - Rastfläche 62 des Bodenflansches 48 des - unteren - schalenförmigen Lagerelements 32 an einer der Oberseite mit der Rastkante 57 abschließenden Sicke 63 des Bodenflansches 48 des konsolenfesten Lagerelements 32 angeordnet ist.

Durch diese Rastelemente - Rastzunge 53 und Rastkante 57 - bleiben die verschiebbaren Schaltenteile 33, nachdem sie einmal in ihre die Umschließung der Gummipuffer 31 vermittelnde und die konsolenfesten schalenförmigen Lagerelemente 32 zu einer insgesamt etwa topfförmigen Hülse ergänzende Position geschoben worden sind, gegen ein Ausrücken aus dieser Soll-Lage gesichert.

Weitere, eine formschlüsige Fixierung der verschiebbaren Schalenteile 33 in deren Soll-Lage vermittelnde Rastelemente sind auch an der jeweils dem Gehäuseblock 13 zugewandten Seite der verschiebbaren Schalenteile 33 angeordnet und sind in spezieller Gestaltung, wie der Detaildarstellung der Fig. 5 entnehmbar, als schräg verlaufende, innerhalb eines erweiterten Endabschnittes 51' bzw. 52' der U-Führungsprofile 51 und 52 der verschiebbaren Schalenteile 33 angeordnete, mit der oberen Nutwange einstückig ausgeführte, schräg verlaufende Stege 64 bzw. 65 ausgebildet, die unter federelastischer Deformation über die Führungsschenkel 44 und 46 hinweggeschoben werden können und in der die Fixierung der verschiebbaren Schalenteile vermittelnden Soll-Lage derselben mit freien Stirnkanten 66 bzw. 67, die quer zur Verschieberichtung verlaufen, an den inneren Querkanten 44' bzw. 46' der Längsführungsschenkel 44 bzw. 46 oder an Stützflächen von Quernuten 68 der Längsführungsschenkel 44 bzw. 46 in formschlüssigen Eingriff mit diesen einrasten und sich axial an diesen abstützen können.

Die Vorrichtung 10 ermöglicht eine einfache Montage der Hydraulikeinheit 11 dahingehend, daß diese Hydraulikeinheit, nachdem die Konsole 17 im Motorraum des Fahrzeuges 12 montiert ist und die Gummipuffer 31 auf die Lagerzapfen 27 aufgesteckt sind, von oben her in die konsolenfesten, "halbschalenförmigen" Lagerelemente eingesetzt und danach die verschiebbaren Schalenteile 33 an die Längsführungsschenkel 44 und 46 angesetzt und durch Verschieben entlang derselben in die die Befestigung der Hydraulikeinheit 11 komplettierende Soll-Lage verschoben werden.

Zur weiteren Vereinfachung der Montage sind die Längsführungsschenkel 44 und 46 der konsolenfesten Lagerelemente 32 mit rückwärtigen, d.h. über deren Bodenflansche 48 axial hinausragenden Verlängerungen 44'' bzw. 46'' versehen, an denen von vornherein die verschiebbaren Schalenteile 33 angesetzt werden können, so daß diese nach dem Einsetzen der Hydraulikeinheit 11 in die konsolenfesten Lagerelemente 32 lediglich in die Fixierungs-Position geschoben werden müssen.

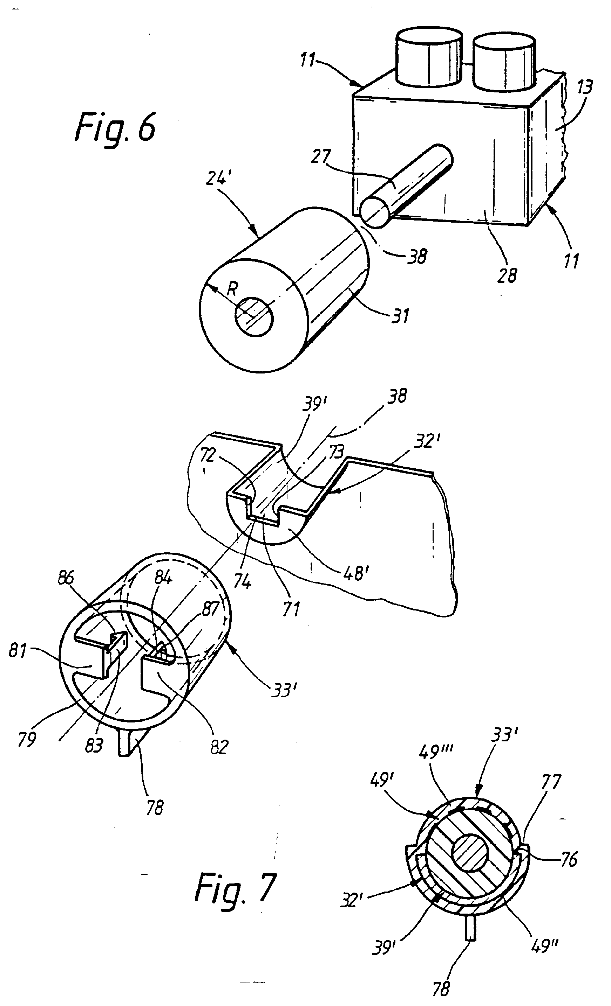

Zur Erläuterung eines weiteren Ausführungsbeispiels sei nunmehr auf die Figur 6 Bezug genommen. Soweit in dieser Figur dargestellte Elemente mit denselben Bezugszeichen belegt sind wie in den Figuren 1 bis 3, soll dies den Hinweis auf Baugleichheit der solchermaßen bezeichneten Elemente mit den entsprechend bezeichneten Elementen der Figuren 1 - 3 und den Verweis auf die diesbezüglichen Beschreibungsteile beinhalten. Soweit Elemente der Figur 6 mit denselben Bezugszeichen belegt sind, wie Elemente der Figuren 1 bis 3 und zusätzlich mit einem Anführungsstrich versehen sind, soll dies auf Bau- und/oder Funktionsanalogie mit den entsprechend bezeichneten Elementen der Figuren 1 - 3 hinweisen.

Das in der Figur 6 dargestellte Gummilager 24' unterscheidet sich von dem in der Figur 3 dargestellten lediglich durch die Gestaltung des konsolenfesten, schalenförmigen Lagerelements 32' sowie der Gestaltung des axial verschiebbaren Schalenteils 33', welches in seiner an das konsolenfeste schalenförmige Lagerelement 32' angesetzten Gebrauchslage die 360°-Umschließung des Gummipuffers 31 komplettiert.

Das konsolenfeste Lagerelement 32' hat, wie am besten aus der Figur 7, auf deren Einzelheiten ebenfalls Bezug genommen sei, ersichtlich, einen halbkreis-zylindrischen Mantel 39', dessen Krümmungsachse die zentrale Achse 38 des Gummilagers 24' ist und einen zu dieser rechtwinklig, d.h. radial verlaufenden Bodenflansch 48', der mit einer, in der Gebrauchslage gesehen, nach oben offenen rechtwinklig berandeten Ausnehmung 71 versehen ist, die parallele, vertikale Ränder 72 und 73 und einen - unteren - horizontalen Querrand 74 hat.

Das auf das konsolenfeste Lagerelement 32' aufsteckbare und an diesem in axialer Richtung verschiebbare Schalenteil 33' ist als eine geschlossene Ringhülse aus Kunststoff ausgebildet, deren Mantel 49' sich in seinem unteren halbkreis-zylindrischen Teil 49'' an die äußere Mantelfläche des konsolenfesten Lagerelements 32' mindestens bereichsweise anschmiegt und dessen, gemäß der Darstellung der Figur 7 oberer Mantelteil 49''', ebenfalls im wesentlichen halbkreis-zylindrisch verlaufend, sich mit seiner inneren Mantelfläche mindestens abschnittsweise an den oberen Bereich des Gummipuffers 31 anschmiegt.

Zwischen diesen beiden Mantelteilen 49'' und 49''' eines Mantels 49' des verschiebbaren Schalenteils 33' vermittelt eine innere Stufe 76, deren radiale Breite der Materialdicke des Mantels 39' des konsolenfesten Lagerelements 32' entspricht, sowie eine äußere, radiale, sichtbare Stufe 77, anhand derer ein Monteur die dargestellte Anordnung der Lagerelemente 32' und 33' erforderliche Orientierung des verschiebbaren Schalenteils 33' erkennen kann. Zu diesem Zweck dient auch eine äußere, radiale Längsrippe 78 des verschiebbaren Schalenteils 33', die in der dargestellten Einbaulage des verschiebbaren Schalenteils 33' nach unten weist.

Das verschiebbare Schalenteil 33' ist an seinem äußeren, d.h. der Hydraulikeinheit 11 abgewandten Rand 79 mit radial nach innen weisenden, federnden Lappen 81 und 82 versehen, von deren freien Enden parallel zur zentralen Achse 38 des Gummilagers 24' verlaufende, in das Innere des konsolenfesten Lagerelements 32' weisende Rastzungen 83 und 84 ausgehen, die an ihren freien - inneren - Enden mit je einer Rastnase 86 bzw. 87 versehen sind, die durch Aufstecken des Schalenteils 33' auf das konsolenfeste, schalenförmige Lagerelement 32' in die vertikalen Ränder 72 und 73 der Ausnehmung 71 des Bodenflansches 48' des konsolenfesten Lagerelements 32' hintergreifende und dadurch das verschiebbare Schalenteil 33' an dem konsolenfesten Lagerelement 32' verankernde und den den Lagerzapfen 27 mit der Hydraulikeinheit 11 umschließenden Gummipuffer 31' des Lagers 24' an der Konsole 17 fixierende Positionen bringbar sind.

## Patentansprüche

1. Vorrichtung zur Montage und Fixierung der Hydraulikeinheit (11) eines ABS (Anti-Blockier-System) und/oder einer ASR (Antriebs-Schlupf-Regeleinrichtung) an der Karosserie (12) eines Straßenfahrzeuges in dessen Motorraum, mit einer Konsole (17), die eine an der Karosserie, z.B. einem oberen horizontal verlaufenden Bereich eines Radkastens befestigbare Grundplatte (19) hat, von der mindestens zwei im Abstand voneinander angeordnete Stützschenkel (34,35 und 36) aufragen, an denen Halteelemente (32,33;32',33') für zylindrisch-hülsenförmige oder zylindrisch-topfförmige Gummipuffer (31) angeordnet sind, mittels derer die Hydraulikeinheit mit von deren Gehäuse abstehenden achsparallelen Lagerzapfen (27), deren zentrale Achsen (32) parallel zu der Grundplatte (19) verlaufen, im Sinne einer Dreipunktlagerung sowohl für Schwingungen, deren Auslenkungen in Richtung der Zapfenachsen (38) erfolgen als auch für Schwingungen, deren Auslenkungen radial dazu erfolgen, schwingungsisolierend gelagert ist,
**dadurch gekennzeichnet,** daß die an den Stützschenkeln (34,35 und 36) angeordneten Lagerelemente (32,32') als nach oben offene, die Gummipuffer (31) auf einem unteren Sektorbereich tragende Teilschalen ausgebildet sind, die an ihren einander abgewandten Enden mit radialen, die axiale Abstützung der Gummipuffer (31) vermittelnden Bodenflanschen (48,48') versehen sind, und daß an diese konsolenfesten, schalenförmigen Lagerelemente (32,32') ansetzbare, die 360°-Umschließung der Pufferelemente (31) komplettierende Schalenteile (33, 33') vorgesehen sind, die in axialer Richtung an den konsolenfesten, schalenförmigen Lagerelementen (32, 32') verschiebbar geführt sind, wobei die verschiebbaren Schalenteile (33, 33') durch formschlüssigen Eingriff mit den konsolenfesten Lagerelementen (32) gegen radiale Verrückungen und durch federnd in wechselseitigen Eingriff mit den konsolenfesten Lagerelementen (32, 32') einrastende Rastelemente (53, 57; 66, 67, 46', 68, 83, 84, 86, 87, 72, 73) gegen axiale Verrückungen gesichert sind.

2. Vorrichtung nach Anspruch 1,
dadurch gekennzeichnet, daß die an den aufragenden Stützschenkeln (34, 35 und 36) angeordneten, die Gummipuffer (31) unterstützend aufnehmenden, konsolenfesten Lagerelemente (32) einen U-förmig ausgebildeten, nach oben offenen Schalenmantel (39) haben, der, im Profilquerschnitt gesehen, einen halbkreisförmigen, den jeweiligen Gummipuffer (31) auf einem unteren 180°-Umfangsbereich tragenden Jochbereich (41), sowie an diesen anschließende, senkrecht aufragende, parallel zueinander und zur zentralen Längsachse (38) des jeweils aufgenommenen Gummipuffers (31) sowie des von diesem aufgenommenen Lagerzapfens (27) der Hydraulikeinheit (11) verlaufende Seitenschenkel (42 und 43) hat, deren von der die zentrale Achse (38) des jeweiligen Gummipuffers (31) enthaltenden Quermittelebene (46) aus gemessene Höhe h geringer ist als deren Außenradius R und vorzugsweise zwischen R/4 und R/2 beträgt, wobei an die oberen Längsränder dieser Seitenschenkel (42 und 43) parallel zu diesen verlaufende und sich von den freien Enden der Lagerelemente (32) her gesehen über den größten Teil der Länge des Mantels (39) der Lagerelemente (32) erstreckende, etwa radial zur zentralen Längsachse (38) der Gummipuffer (31) und vorzugsweise rechtwinklig zu den Seitenschenkeln (42 und 43) des Mantels (39) der Lagerelemente (32) verlaufende Längsführungsschenkel (44 und 46) anschließen, an welche, diese mit U-förmigen Führungsprofilen (51 und 52) außenseitig umgreifend, die die 360°-Umschließung der Gummipuffer (31) komplettierenden Schalenteile (33), in axialer Richtung geführt verschiebbar, ansetzbar sind, die mit mindestens einem Rastelement (64 und/oder 65) versehen sind, das bei Verschiebung des verschiebbaren Schalenteils (33) bis in dessen Soll-Lage in eine eine Rastkante (46'; 68) des konsolenfesten Lagerteils (32) hintergreifende und dadurch das verschiebbare Schalenteil (33) gegen axiale Verrückungen sichernde Raststellung gelangt.

3. Vorrichtung nach Anspruch 2,
dadurch gekennzeichnet, daß das verschiebbare Schalenteil (33) an seinem der Hydraulikeinheit (11) abgewandten Ende mit einer in axialer Richtung federnd auslenkbaren, radial verlaufenden Rastzunge (53) versehen ist, die von einem im Profilquerschnitt des verschiebbaren Schalenteils (33) gesehen, flach-glockenförmig verlaufenden, zwischen dessen Führungs-U-Profilen (51 und 52) vermittelnden und sich auf einen Sektorbereich an die äußere Mantelfläche des Gummipuffers (31) anschmiegenden Mantelbereich (49) des verschiebbaren Schalenelements (33) ausgeht und in dessen die Fixierung an dem konsolenfesten Lagerelement (32) vermittelnder Montageposition eine Rast-Querkante (57) des radialen Bodenflansches (48) des konsolenfesten Lagerelements (32) an dessen dem Gummipuffer (31) zugewandter Seite mit schmaler Überlappung hintergreifend angeordnet ist, derart, daß die dem Gummipuffer (31) zugewandten Innenflächen (58 und 59) der Rastzunge (53) des verschiebbaren Schalenteils (33) bzw. des konsolenfesten Lagerteils (32) koplanar verlaufen.

4. Vorrichtung nach Anspruch 3,
dadurch gekennzeichnet, daß die Längsführungsschenkel (44 und 46) der konsolenfesten Lagerelemente (32) mit in einer rechtwinklig zu der zentralen Längsachse (38) verlaufenden Ebene verlaufenden Querkanten (44' und 46') enden, die in einem axialen Abstand von den bzw. den konsolenfesten Stützschenkel(n) (34 bzw. 35 und 36) angeordnet sind, und daß die verschiebbaren Schalenteile (33) mit federnd nachgiebigen Rastzungen (64; 65) versehen sind, deren freie Enden - in der Soll-Lage der verschiebbaren Schalenteile (33) - in axialer Abstützung mit den der Hydraulikeinheit (11) zugewandten Querkanten (44' und 46') der Längsführungsschenkel (44 und 46) angeordnet sind.

5. Vorrichtung nach Anspruch 4,
dadurch gekennzeichnet, daß die verschiebbaren Schalenteile (33) mit in axialen Abstand von ihren der Hydraulikeinheit (11) zugewandten Enden angeordneten, insbesondere stegförmigen, federnd nachgiebigen Rastelementen (64 und 65) versehen sind, die, in der Soll-Lage der verschiebbaren Schalenteile (33) in zu ihren freien Enden komplementär gestalteten Vertiefungen (68) der Längsführungsschenkel (44 und 46) der konsolenfesten Lagerelemente (32) einrasten.

6. Vorrichtung nach Anspruch 4 oder Anspruch 5,
dadurch gekennzeichnet, daß die federnd nachgiebigen Raststege (64 und/oder 66) der verschiebbaren Schalenteile (33) an Führungsnut-Abschnitten (51', 52') angeordnet sind, deren lichte Weite um mindestens den Auslenkungshub der Raststege (64, 65) größer ist als die Dicke der Längsführungsschenkel (44 und 46) der konsolenfesten Lagerelemente (32).

7. Vorrichtung nach Anspruch 1,
dadurch gekennzeichnet, daß das konsolenfeste Lagerelement (32') einen halbkreis-zylindrischen Mantel (39') hat, daß der Bodenflansch (48') dieses Lagerelements (32') mit einer randoffenen, rechtwinklig berandeten Ausnehmung (71) versehen ist, deren parallele Ränder (72 und 73) in der Einbaulage vorzugsweise senkrecht verlaufen, daß das verschiebbare Schalenteil (33') als eine geschlossene Ringhülse ausgebildet ist, die sich, in der Gebrauchslage gesehen, mit einem unteren Teil (39'') ihres Mantels (39') an die äußere Mantelfläche des konsolenfesten Lagerelements (32') und mit einem oberen Teil (39''') ihres Mantels (39') an die äußere Mantelfläche des Gummipuffers (31) mindestens bereichsweise anschmiegt, und daß das verschiebbare Schalenteil (33') an seinem äußeren Rand (79) mit von radial nach innen weisenden federnden Lappen (81 und 82) ausgehenden, in axialer Richtung sich erstreckenden, zentralen Rastzungen (83 bzw. 84) versehen ist, deren Rastnasen (86 und 87) durch Verschiebung des Schalenteils (33') in seine Fixierungsposition bringbar ist, in der diese Rastnasen die seitlichen Ränder (72 und 73) der Ausnehmung (71) hintergreifen.

8. Vorrichtung nach einem der Ansprüche 1 bis 7,
dadurch gekennzeichnet, daß die verschiebbaren Schalenteile (33) als Spritzguß-Kunststoffteile aus Copolymeren des Polymethylenoxids oder einem damit äquivalenten Kunststoff-Material hergestellt sind.

## Claims

1. Device for mounting and fixing the hydraulic unit (11) of an ABS (anti-lock system) and/or an ASR (drive-slip control device) on the body (12) of a road vehicle in its engine space, with a bracket (17) having a baseplate (19) which is fastenable to the body, for example to an upper horizontal region of a wheel case, and from which at least two supporting legs (34, 35 and 36) arranged at a distance from each other project upwards, on which are arranged holding elements (32, 33; 32', 33') for rubber buffers (31) in the form of a cylindrical sleeve or of a cylindrical pot, by means of which the hydraulic unit is mounted in the fashion of a three-point mounting, by means of axis-parallel bearing journals (27) which project from its housing and the central axes (32) of which extend parallel to the baseplate (19), in a vibration-insulating manner both as regards vibrations with deflections occurring in the direction of the journal axes (38) and as regards vibrations with deflections occurring radially thereto, characterised in that the bearing elements (32, 32') arranged on the supporting legs (34, 35 and 36) are designed as upwardly open part shells which carry the rubber buffers (31) over a lower sector region and which are equipped at their ends facing away from one another with radial bottom flanges (48, 48') ensuring the axial support of the rubber buffers (31), and in that there are shell parts (33, 33') which are attachable to these shell-shaped bearing elements (32, 32') fixed to the bracket and complete the surrounding of the buffer elements (31) over 360° and which are guided displaceably in the axial direction on the shell-shaped bearing elements (32, 32') fixed to the bracket, the displaceable shell parts (33, 33') being secured against radial shifts as a result of positive engagement with the bearing elements (32) fixed to the bracket and against axial shifts by catch elements (53, 57; 66, 67, 46', 68, 83, 84, 86, 87, 72, 73) locking resiliently into mutual engagement with the bearing elements (32, 32') fixed to the bracket.

2. Device according to Claim 1, characterised in that the bearing elements (32) arranged on the upwardly projecting supporting legs (34, 35 and 36), supportively receiving the rubber buffers (31) and fixed to the bracket have a U-shaped upwardly open shell envelope (39) which, as seen in profile cross-section, possesses a semicircular yoke region (41) carrying the respective rubber buffer (31) over a lower 180° circumferential region and vertically upward-projecting side legs (42 and 43) which are joined to the yoke region (41) and extend parallel to one another and parallel to the central longitudinal axis (38) of the respective rubber buffer (31) received and of the bearing journal (27) of the hydraulic unit (11) received by this and of which the height h measured from the transverse mid-plain (46) containing the central axis (38) of the respective rubber buffer (31) is smaller than its outer radius R and preferably amounts to between R/4 and R/2, there being joined to the upper longitudinal edges of these side legs (42 and 43) longitudinal guide legs (44 and 46) which are parallel to these and, as seen from the free ends of the bearing elements (32), extend over most of the length of the envelope (39) of the bearing elements (32) and are approximately radial to the central longitudinal axis (38) of the rubber buffers (31) and preferably at right angles to the side legs (42 and 43) of the envelope (39) of the bearing elements (32) and to which can be attached displaceably axially under guidance, so as to surround these on the outside by means of U-shaped guide sections (51 and 52), the shell parts (33) which complete the surrounding of the rubber buffers (31) over 360° and which are equipped with at least one catch element (64 and/or 65) which, when the displaceable shell part (33) is displaced into its desired position, come into a catch position engaging behind a catch edge (46'; 68) of the bearing part (32) fixed to the bracket and thereby securing the displaceable shell part (33) against axial shifts.

3. Device according to Claim 2, characterised in that the displaceable shell part (33) is equipped, at its end facing away from the hydraulic unit (11), with a radially extending catch tongue (53) which is resiliently deflectable in the axial direction and which starts from an envelope region (49) of the displaceable shell element (33) extending in the form of a shallow bell, as seen in the profile cross-section of the displaceable shell part (33), joining its U-shaped guide sections (51 and 52) and mating over a sector region with the outer envelope surface of the rubber buffer (31), and in whose mounting position ensuring the fixing to the bearing element (32) fixed to the bracket a transverse catch edge (57) of the radial bottom flange (48) of the bearing element (32) fixed to the bracket is arranged on its side facing the rubber buffer (31) so as to engage behind it with a narrow overlap, in such a way that the inner faces (58 and 59), which face the rubber buffer (31), of the catch tongue (53) of the displaceable shell part (33) or of the bearing part (32) fixed to the bracket extend in a coplanar manner.

4. Device according to Claim 3, characterised in that the longitudinal guide legs (44 and 46) of the bearing elements (32) fixed to the bracket terminate in transverse edges (44' and 46') which extend in a plane running at right angles to the central longitudinal axis (38) and which are arranged at an axial distance from the supporting leg or supporting legs (34 or 35 and 36) fixed to the bracket, and in that the displaceable shell parts (33) are equipped with resiliently flexible catch tongues (64; 65), the free ends of which, in the desired position of the displaceable shell parts (33), are arranged mutually supported axially relative to the transverse edges (44' and 46'), of the longitudinal guide legs (44 and 46), facing the hydraulic unit (11).

5. Device according to Claim 4, characterised in that the displaceable shell parts (33) are equipped with especially web-shaped resiliently flexible catch elements (64 and 65) which are arranged at an axial distance from their ends facing the hydraulic unit (11) and which, in the desired position of the displaceable shell parts (33), lock into depressions (68), designed to complement their free ends, of the longitudinal guide legs (44 and 46) of the bearing elements (32) fixed to the bracket.

6. Device according to Claim 4 or Claim 5, characterised in that the resiliently flexible catch webs (64 and/or 66) of the displaceable shell parts (33) are arranged on guide-groove portions (51', 52'), the clear width of which is larger by at least the deflection stroke of the catch webs (64, 65) than the thickness of the longitudinal guide legs (44 and 46) of the bearing elements (32) fixed to the bracket.

7. Device according to Claim 1, characterised in that the bearing element (32') fixed to the bracket has a semicircular-cylindrical envelope (39'), in that the bottom flange (48') of this bearing element (32') is equipped with a marginally open, rectangularly edged recess (71), the parallel edges (72 and 73) of which preferably extend vertically in the installation position, in that the displaceable shell part (33) is designed as a closed annular sleeve which, as seen in the position of use, mates at least in places in a lower part (39'') of its envelope (39') with the outer envelope surface of the bearing element (32') fixed to the bracket and in an upper part (39''') of its envelope (39') with the outer envelope surface of the rubber buffer (31), and in that the displaceable shell part (33') is equipped on its outer edge (79) with central catch tongues (83 and 84) which start from radially inward-pointing resilient tabs (81 and 82) and extend in the axial direction and the catch noses (86 and 87) of which can be brought as a result of the displacement of the shell part (33') into its fixing position, in which these catch noses engage behind the lateral edges (72 and 73) of the recess (71).

8. Device according to one of Claims 1 to 7, characterised in that the displaceable shell parts (33) are produced as plastic injection mouldings from copolymers of polymethylene oxide or from a plastic material equivalent to this.

## Revendications

1. Dispositif pour le montage et la fixation de l'unité hydraulique (11) d'un ABS (système anti-blocage) et/ou d'un ASR (dispositif de régulation du patinage en propulsion) à la carrosserie (12) d'un véhicule routier, dans le compartiment de moteur de ce véhicule, comprenant une console (17) qui possède une plaque de base (19) pouvant être fixée à la carrosserie, par exemple, à la région supérieure, horizontale, d'un passage de roue, sur lequel s'élèvent au moins deux branches supports (34, 35 et 36) disposées à un certain écartement l'une de l'autre, sur lesquelles sont agencés des éléments de retenue (32, 33 ; 32', 33') servant à retenir des tampons de caoutchouc (31) en forme de manchon cylindrique ou de godet cylindrique, au moyen desquels l'unité hydraulique est montée à l'aide de tourillons de portée (27) parallèles à l'axe, qui font saillie sur son boîtier, et dont les axes centraux (32) s'étendent parallèlement à la plaque de base (19), à la façon d'un montage sur trois points avec isolation des vibrations, aussi bien pour les vibrations dont les excursions se produisent dans la direction des axes (38) des tourillons que pour les vibrations dont les excursions se produisent radialement à ces axes,
caractérisé en ce que les éléments de portée (32, 32') disposés sur les branches supports (34, 35 et 36) sont réalisés sous la forme de coquilles partielles s'ouvrant vers le haut, qui portent les tampons de caoutchouc (31) sur une région inférieure en forme de secteur, qui sont munies, à leurs extrémités opposées les plus éloignées l'une de l'autre, de flasques de fond radiaux (48, 48'), qui assurent l'appui axial des tampons de caoutchouc (31) et en ce qu'il est prévu des parties des coquilles (33, 33') qui peuvent être ajoutées à ces éléments de portée (32, 32') en forme de coquille, solidaires des consoles, qui complètent l'encerclement sur 360° des éléments tampons (31), et qui sont guidées pour coulisser dans la direction axiale le long des éléments de portée (32, 32') en forme de coquille, solidaires des consoles, les parties de coquilles coulissantes (33, 33') étant bloquées à l'encontre des décalages radiaux par prise par sûreté de forme avec les éléments de portée (32) solidaires des consoles et à l'encontre des décalages axiaux par des éléments de verrouillage (53, 57 ; 66, 67, 46', 68, 83, 84, 86, 87, 72, 73) qui peuvent se verrouiller élastiquement en prise réciproque avec les éléments de portée (32, 32') solidaires des consoles.

2. Dispositif selon la revendication 1,
caractérisé en ce que les éléments de portée (32) en solidaires des consoles, agencés sur les branches supports (34, 35 et 36) dirigées vers le haut, qui reçoivent les tampons de caoutchouc (31) en les soutenant par dessous, ont une paroi latérale de coquille (39) en forme de U, s'ouvrant vers le haut, et qui, considérée en profil, présente une région de travée (41) en forme de demi-cercle, qui porte le tampon de caoutchouc (31) correspondant, sur une zone inférieure, de 180°, de la circonférence, ainsi que des branches latérales (42 et 43) qui font suite à cette région transversale, s'élèvent verticalement, et s'étendent parallèlement l'une à l'autre et à l'axe longitudinal central (38) du tampon de caoutchouc (31) supporté , ainsi qu'à l'axe longitudinal du tourillon de portée (27) de l'unité hydraulique (11) supportée par ce tampon, branches latérales dont la hauteur h, mesurée à partir du plan médian transversal (46) qui contient l'axe central (38) du tampon de caoutchouc (31) correspondant, est plus petite que leur rayon extérieur R, et représente de préférence entre R/4 et R/2, cependant qu'aux bords longitudinaux supérieurs de ces branches latérales (42 et 43), se raccordent des branches de guidage longitudinal (44 et 46), qui s'étendent parallèlement à ces bords latéraux et s'étendent, considéré à partir des extrémités libres des éléments de portée (32), sur la plus grande partie de la longueur de la paroi latérale (39) de ces éléments de portée (32) et sont orientées à peu près radialement à l'axe longitudinal central (38) du tampon de caoutchouc (31) et de préférence perpendiculairement aux branches latérales (42 et 43) de la paroi latérale des éléments de portée et auxquelles peuvent se monter, par coulissement guidé dans la direction axiale, des parties de coquilles (33), qui les emboîtent extérieurement par des profilés de guidage (51 et 52) en forme de U, qui complètent l'encerclement de 360° des tampons de caoutchouc (31) et qui sont munies d'au moins un élément de verrouillage (64 et/ou 65) qui, lorsqu'on fait coulisser la partie de coquille coulissante (33) jusqu'à sa position de consigne, parvient dans une position de verrouillage qui s'accroche derrière un bord de verrouillage (46'; 68) de la partie de portée (32) solidaire de la console et, de cette façon, verrouille la partie de coquille coulissante (33) à l'encontre des décalages axiaux.

3. Dispositif selon la revendication 2,
caractérisé en ce que la partie de coquille coulissante (33) est munie, à son extrémité qui est éloignée de l'unité hydraulique (11), d'une languette de verrouillage (53) s'étendant radialement, qui peut fléchir élastiquement dans la direction axiale, et qui part d'une région (49) de la paroi latérale de l'élément de coquille coulissant (33) qui s'étend en forme de cloche aplatie, dans une vue de profil de la partie de coquille coulissante (33), entre les profilés en U (51 et 52) assurant son guidage et qui s'appuie contre la paroi latérale extérieure du tampon de caoutchouc (31) cependant que, dans la position de montage de cette partie de coquille coulissante, qui assure la fixation sur l'élément de portée (32) solidaire de la console, un bord transversal de verrouillage (57) du flasque de fond radial (48) de l'élément de portée (32) solidaire de la console, est disposé en s'accrochant derrière le côté de cet élément qui est dirigé vers le tampon de caoutchouc (31), avec un petit recouvrement, de telle sorte que les surfaces internes (58 et 59) de la languette de verrouillage (53) de la partie de coquille coulissante (33) et de la partie de portée (32) solidaire de la console qui sont dirigées vers le tampon de caoutchouc (31) s'étendent dans un même plan.

4. Dispositif selon la revendication 3,
caractérisé en ce que les branches de guidage longitudinal (44 et 46) des éléments de portée (32) solidaires des consoles se terminent par des bords transversaux (44' et 46') qui s'étendent dans un plan perpendiculaire à l'axe longitudinal central (38), et qui sont disposés à une distance axiale de la ou des branches supports (34 ou 35 et 36) solidaires des consoles, et en ce que les parties de coquilles coulissantes (33) sont munies de languettes de verrouillage (64 ; 65) pouvant céder élastiquement, dont les extrémités libres sont disposées - dans la position de consigne des parties de coquilles coulissantes (33) - en appui axial contre les bords transversaux (44' et 46') des branches de guidage longitudinal (44 et 46) qui sont dirigés vers l'unité hydraulique (11).

5. Dispositif selon la revendication 4,
caractérisé en ce que les parties de coquilles coulissantes (33) sont munies d'éléments de verrouillage (64, 65), en particulier en forme de nervures et capables de céder élastiquement disposés à distance axiale de leurs extrémités dirigées vers l'unité hydraulique (11), et qui se verrouillent, dans la position de consigne des parties de coquilles coulissantes (33), dans des évidements (68) des branches de guidage longitudinal (44 et 46) des éléments de portée (32) solidaires des consoles évidements, qui sont d'une forme complémentaire de leurs extrémités libres.

6. Dispositif selon la revendication 4 ou la revendication 5,
caractérisé en ce que les nervures de verrouillage (64 et/ou 66), capables de céder élastiquement, des parties de coquilles coulissantes (33) sont disposées sur des segments (51', 52') des rainures de guidage, dont la largeur libre est supérieure, au moins de la course d'excursion des nervures de verrouillage (54, 55), à l'épaisseur des branches de guidage longitudinal (44 et 46) des éléments de portée (32) solidaires des consoles.

7. Dispositif selon la revendication 1,
caractérisé en ce que l'élément de portée (32') solidaire d'une console possède une paroi latérale (39') cylindrique à base semi-circulaire, en ce que le flasque de fond (48') de cet élément de portée (32') est muni d'un évidement (71) ouvert sur le bord, et à bords à angle droit, dont les bords parallèles (72 et 73) s'étendent de préférence verticalement dans la position de montage, en ce que la partie de coquille coulissante (33') présente la forme d'un manchon annulaire fermé qui, considéré dans la position d'utilisation, s'appuie au moins par zones contre la surface latérale extérieure de l'élément de portée (32' ) solidaire de la console par une partie inférieure (39'') de sa paroi latérale (33') et au moins par zones contre la surface latérale extérieure du tampon en caoutchouc (31) par une partie supérieure (39'') de sa paroi latérale (39'), et en ce que la partie de coquille coulissante (33') est munie, sur son bord extérieur (79), de languettes de verrouillage centrales (83 ou 84) s'étendant dans la direction axiale, et qui partent de pattes (81 et 82) élastiques s'étendant radialement vers l'intérieur, les dents de verrouillage (86 et 87) de ces languettes pouvant être placées, par coulissement de la partie de coquille (33'), dans leur position de fixation dans laquelle ces dents de verrouillage s'accrochent derrière les bords latéraux (72 et 73) de l'évidement (71).

8. Dispositif selon une des revendications 1 à 7,
caractérisé en ce que les parties de coquilles coulissantes (33) sont fabriquées sous la forme de pièces de matière plastique moulées par injection, faites de copolymères de polyoxyméthylène, ou d'une matière plastique équivalente à celle-ci.
